(19)

Europäisches
Patentamt
European
Patent Office
Office européen
des brevets

(11) **EP 3 670 599 A1**

(12) **EUROPEAN PATENT APPLICATION**

(43) Date of publication:
**24.06.2020 Bulletin 2020/26**

(51) Int Cl.:
***C08L 23/00*** *(2006.01)*

(21) Application number: **18215241.3**

(22) Date of filing: **21.12.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borealis AG
1220 Vienna (AT)**

(72) Inventors:
• **Wannerskog, Åsa
444 86 Stenungsund (SE)**

• **Hjärtfors, Anna
444 86 Stenungsund (SE)**
• **Prieto, Oscar
444 86 Stenungsund (SE)**
• **Anke, Martin
444 86 Stenungsund (SE)**
• **Watson, Ann
Arbroath, DD11 3RH (GB)**

(74) Representative: **Kador & Partner PartG mbB
Corneliusstraße 15
80469 München (DE)**

(54) **IMPROVED FOAMING BEHAVIOUR OF POLYMER COMPOSITIONS USING BLOWING AGENT AND NUCLEATION AGENT**

(57)     The invention relates to a foamable polymer composition comprising a blowing agent and a foamed polymer composition obtained by foaming this foamable polymer composition. The invention further relates to a cable comprising at least one layer which comprises the foamable polymer composition or a foamed polymer composition.

**EP 3 670 599 A1**

**Description**

The invention relates to a foamable polymer composition comprising a blowing agent and a foamed polymer composition obtained by foaming this foamable polymer composition. The invention further relates to a cable comprising at least one layer which comprises the foamable polymer composition or the foamed polymer composition.

Communication cables are used to transmit signals of high frequency, such as as light pulses as in fibre optical cables.

Electrical communication cables for telephone and data transmission are normally twisted pair cables. Assembly of the twisted pair cables involves passing the insulated conductor through machinery and this may cause abrasion or deformation. The twisting process is extremely delicate as back tension will greatly affect the tightness and hence separation of the conductors. Excess tension during subsequent sheathing and installation will equally affect conductor separation, in effect a crush phenomenon. The key parameters affecting crush performance are tensile strength and hardness which must be maximised in order to achieve optimum results.

Another type of electrical communication cable is the coaxial cable construction. Coaxial cables are used for transmission of radio, cable TV and data signals. Coaxial cables consist of two separate parallel conductors that are separated by an insulating dielectric.

The conductors in communication cables are metal and the insulation can be made from different materials, suitably polyolefins such as polyethylene. As the frequency of the transmitted signal increases, the relative permittivity of the insulation becomes more important. The relative permittivity is a material specific property, and it is lower for air than for polyolefins, such as polyethylene. By foaming the polyolefin composition insulation, gas is introduced and the relative permittivity decreases linearly with expansion degree. Relative permittivity is also commonly known as dielectric constant, and these terms are used interchangeably.

Foaming of polyolefin composition can be done either using chemical or physical blowing agents, or a combination of both. Chemical blowing agents are substances which release blowing gas through thermal decomposition reactions and the chemical blowing agent is consumed in the foaming reaction. Examples of such substances are hydrazine, hydrazide, or azodicarbonamide (ADCA), citric acid, or a derivate of citric acid or those based on combinations of solid organic acids (or a metal salt thereof) and alkali metal carbonate(s) or alkali metal bicarbonate(s), such as a combination of citric acid/derivate of citric acid and sodium bicarbonate.

Physical blowing agents are gasses which are injected directly into the polymer melt. In such processes it is common to use chemical blowing agents as cell nucleators as the gas formed by the blowing agent reaction serves as nucleating points with lower energy for bubble formation. The gas used as physical blowing agent can be for example $N_2$ or $CO_2$. Both chemical and physical foaming extrusion processes are used for extrusion of foamed communication cable insulation. In chemical foaming, all the blowing gas comes from decomposition of a chemical blowing agent.

A nucleating agent, nucleator or kicker, is normally used in physical foaming processes. The nucleating agent provides points in the insulation where the energy needed for bubble formation is lower. These nucleating agents can be either passive or active. An active nucleating agent is a substance that decomposes into gaseous products i.e. a chemical blowing agent, while passive nucleating agents are particles that only provide local points of lower energy where bubble formation is more likely to happen.

In many foamed polymer applications, the blowing agent masterbatch is added to the polymer composition either by direct feeding into the extruder or by dry mixing the blowing agent masterbatch with the polymer composition prior to the extrusion process. Depending on type and length of the extruder, this can result in poor mixing of blowing agent masterbatch and polymer composition. Other factors that influence are differences in rheology between polymer composition and blowing agent masterbatch, extrusion speed and extrusion temperature. In cable extrusion processes, the extruders are typically not designed for mixing polymer compositions and communication cables are normally extruded at high line speeds in order to have a good productivity. Poor mixing of blowing agent masterbatch and polymer composition results in a poor cell structure as the gas and solid nucleators are not evenly distributed in the polymer composition leading to uneven bubble nucleation and growth as well as larger areas of solid material without any cells.

The distribution of blowing agent in the polymer composition is improved by melt mixing the blowing agent masterbatch into the polymer composition by compounding prior to the extrusion process. This results in improved cell structure as the gas and solid particles acting as bubble nucleation sites are better distributed in the polymer melt. For communication cables it is critical to have a good cell structure within the foamed insulation in order to have improved electrical properties. It is desired to have a cell structure with many small cells evenly distributed within the insulation. The cell structure is also important for mechanical properties. Having many small cells that are well distributed will give better crush resistance compared to a structure with larger cells that are not homogeneously distributed as this will give weak parts in the insulation.

The main blowing agent used in the cable industry is azodicarbonamide (ADCA) which has a decomposition temperature range fitting well into the processing window of polyolefins, such as polyethylene, and gives fine foam structure, which is a key requirement for cable applications. Due to inclusion of ADCA on the REACH (Registration, Evaluation, Authorisation and Restriction of Chemicals) candidate list and the risk of future inclusion on authorisation list, there are a lot of efforts put into finding an alternative solution. The reason for ADCA being identified as a SVHC (substance of very high concern) and included in the candidate list is that it has been identified as a respiratory sensitiser with known cases of asthma in workers exposed to ADCA in powder form.

Another issue with azodicarbonamide is that ammonia is released from the blowing agent decomposition reactions. This is disturbing the working environment for cable manufacturers as it gives a bad smell.

Alternatives to ADCA which are compatible with the processing window of polyethylene are the endothermic blowing agents. Endothermic blowing agents are conventionally combinations of sodium bicarbonate and citric acid or a derivative of citric acid. These blowing agents are normally added directly to the extruder hopper, or dry mixed with polyolefins prior to extrusion. In high speed extrusion processes like cable extrusion, this way of adding the blowing agent does not provide sufficient homogenisation of the blowing agent in the polymer melt and this results in a foamed insulation with poor cell structure and bad surface.

The main problem with endothermic blowing agents for cable applications is that sodium bicarbonate starts to decompose below 100°C, with a reaction rate maximum between 130 and 140°C, which generally is considered as being too close to the melting temperature of high density polyethylene to allow compounding without complete decomposition of the sodium bicarbonate blowing agent. One object of the invention is increasing the process window, i.e. allow higher compounding temperatures.

The blowing agent sodium bicarbonate gradually decomposes into sodium carbonate, water and carbon dioxide. The decomposition reaction is endothermic and heat is required in order for it to occur. The reaction start to occur already at temperatures below 100 °C, but the reaction rate is very low at those temperatures. The reaction increases rapidly as temperature increases with a reaction rate maximum between 130 °C and 140 °C, see Hartman et al., Ind. Eng. Chem. Res. 2013, 52, 10619-10626. High density polyethylene typically have melting temperatures around 130 °C, and it is generally believed that compounding of sodium bicarbonate into high density polyethylene is not possible as the melting point of the polymer is very close to the maximum decomposition rate of the sodium bicarbonate blowing agent.

WO 2014/018768 is providing additive compositions for polymer base materials with particular use in applications where high dielectric constants, low loss factors and low densities are preferred, such as in applications involving wire and cable dielectric materials. The disclosed additive compositions consist of thermoplastic polymer carrier, chemical blowing agent and filler.

It is an object of the invention to provide a foamable polymer composition which overcomes the above-mentioned problems.

It is a further object of the invention is to replace hydrazine, hydrazide or azodicarbonamide (ADCA) in a foamable polymer composition, while maintaining an improved cell structure, i.e. small and uniform distribution of cells in the foam, in the foamed product.

It is still a further an object of the invention to provide foamable polymer composition which does not comprise halogenated hydrocarbons, such as hydrofluorocarbons (HFC), hydrochlorofluorocarbons (HCFC) and perfluorocarbons, or fluororesin, such as polytetrafluorethylene (PTFE).

It is still another object of the invention to provide a foamed polymer composition having reduced density and at the same time a high cell density, small cells uniformly distributed in the foamed polymer and maintaining an improved, i.e. low, dissipation factor.

Another object of the invention is to avoid exothermic blowing agent decomposition where the heat released from the decomposition reaction starts a chain reaction causing the blowing agent to react uncontrolled during any extrusion process such as compounding.

Still another object of the invention is to increase the decomposition temperature of the blowing agent in the foamable polyolefin polymer composition, thus avoid any compounds that comprise sodium bicarbonate.

A further object of the invention is to replace hydrazine, hydrazide, or azodicarbonamide, while maintaining same cell structure (small and uniform distribution of cells), while maintaining line speed, while maintaining processability, and with same output from cable extruder.

Another object of the invention is the ability to use conventional cable extruders, i.e. no replacement of equipment and no modification of present equipment required compared to conventional hydrazine, hydrazide, or azodicarbonamide compounds, such as azodicarbonamide (ADCA). The extrusion temperature of the invention is typically higher, but still within the process window of conventional cable extruders.

Another object of the invention is to increase the process window, meaning less risk for degradation in compounding, thus better consistence and better quality. Using the invention means that difference between the decomposition temperature of the blowing agent and the melting point of the foamable polymer composition is increased.

The higher decomposition temperature allows better dispersion of blowing agent, nucleating agents and other additives such as antioxidants in the foamable polyolefin polymer composition by allowing higher energy input into the polyolefin polymer composition during mixing without risk of losing the blowing agent by kicking off the decomposition reactions during the mixing process.

It is thus an object of the invention to design a blend that results in homogenous foam that can be extruded at high speed on any cable extruder with good cell structure in the foamed layer in a cable.

Another object of the invention is a good distribution of bubble nucleation sites in the foamable polyolefin polymer composition.

The present invention is based on the surprising finding that all the above-mentioned objects can be solved by using a blowing agent comprising citric acid and/or derivative of citric acid, preferably in combination with a mineral nucleating agent, in a foamable polymer composition.

Therefore, the invention provides a foamable polymer composition comprising

(A) a first polyolefin polymer,

(B) a second polyolefin polymer having an $MFR_2$ (2,16 kg; 190 °C) of 2 to 15 g/10min measured according to ISO 1133, and

(C) a blowing agent in an amount of 0,01 to 2 wt.% based on the total foamable polymer composition,

wherein the blowing agent (C) comprises citric acid and/or derivative of citric acid in an amount of more than 90 wt.% based on the total blowing agent (C), and wherein the first polyolefin polymer (A) has a higher density than the second polyolefin polymer (B).

The invention further provides a foamed polymer composition obtained by foaming the foamable polymer composition according to the invention.

Further provided is a cable comprising at least one layer which comprises the foamable polymer composition according to the invention, or the foamed polymer composition according to the invention.

Foamable means that it is possible to produce at least one layer in a cable from the composition that is foamed in, for example, an extrusion process.

The present invention has several advantages. The inventive foamable polymer composition can be foamed into a foamed polymer composition without using noxious blowing agents such as ADCA and halogenated hydrocarbons.

The present invention thus also avoids the use of exothermic blowing agents, such as ADCA, but uses endothermic blowing agents, that is citric acid and/or derivative of citric acid. Endothermic blowing agents are easier to control as constant supply of heat is needed for the reaction to continue. This also enables better control of gas release from the blowing agent, especially during continuous processes such as extrusion.

Another advantage of citric acid or a derivate of citric acid is that during decomposition they release $CO_2$ as the main blowing gas. $CO_2$ has better solubility in the foamable polymer composition, compared to $N_2$ that is released from hydrazine, hydrazide, or azodicarbonamide (ADCA).

The foamed polymer composition obtained by foaming the foamable polymer composition exhibits a foam density comparable to that of foams using ADCA but having a comparable or even smaller cell size and a comparable or even higher cell density in the foam with respect to ADCA blown foams.

Blowing agent is a substance which is capable of producing a cellular structure via a foaming process in the foamable polymer composition. A blowing agent is typically applied when the polymer is melted. The cellular structure in the polymer matrix reduces density and the relative permittivity of the foamable polymer composition.

Citric acid and derivatives of citric acid decomposes into water, carbon dioxide and solid decomposition products. The decomposition reactions are endothermic meaning that a continuous supply of heat energy is required in order for it to occur. The temperature at which the decomposition reactions occur at a fast rate depends on the chemical substance (citric acid or a citric acid derivate), but is typically around 200°C. The decomposition temperatures of citric acid and derivatives of citric acid are well above the melting points of polyolefin polymers and can thus be compounded into the polyolefin polymer prior to cable extrusion without pre-decomposition in the mixing step.

Preferably, the blowing agent (C) comprises more than 92 wt.% of citric acid or a derivate of citric acid, more preferably more than 95 wt.%, or most preferably the blowing agent (C) consists of citric acid or a derivate of citric acid. The advantage of using only "one" blowing agent (C) is to even better control the foaming process as only one decomposition temperature interval has to be taken into account during processing which reduces the complexity of the process.

The amount of blowing agent (C) is preferably 0,02 wt.% to 1,7 wt.%, more preferably 0,03 wt.% to 1,4 wt.%, even more preferably 0,04 wt.% to 1,2 wt.%, more preferably 0,1 wt.% to 1 wt.% and most preferably 0,15 wt.% to 0,9 wt.%, based on the total foamable polymer composition.

Preferably, the derivative of citric acid comprises alkali metal salts of citric acid, esters of citric acid or mixtures thereof. The alkali metal salts of citric acid preferably comprises one or more selected from the group consisting of monosodium citrate, disodium citrate, trisodium citrate, monopotassium citrate, dipotassium citrate and tripotassium citrate. Among the aforementioned alkali metal salts monosodium citrate is most preferred.

Preferably, the blowing agent (C) does not comprise halogenated hydrocarbons and/or fluororesin. Halogenated hydrocarbons are, for example, hydrofluorocarbons (HFC), hydrochlorofluorocarbons (HCFC) and perfluorocarbons (PFC). Fluroresins are resins comprising fluoro-carbon bonds, for example, polytetrafluorethylene (PTFE).

The foamable polymer composition preferably further comprises a mineral nucleating agent (E). The mineral nucleating agent (E) is typically a mineral with high surface area. The interface between the mineral nucleating agent (E) and the polymer composition melt will serve as nucleating sites for bubble formation during the foaming process as the energy required for bubble formation is lower in this interface than in the bulk polymer melt. The mineral nucleating agent (E) preferably comprises a magnesium-containing compound, a calcium-containing compound, a silicon-containing compound or mixtures thereof. The mineral nucleating agent can be any mineral filler, for example silica, talc, calcium carbonate, kaolin, dolomite, zeolites, mica, wollastonite or clay mineral.

To obtain a uniform distribution of the mineral nucleating agent (E) in the foamable polymer composition, the mineral nucleating agent (E) is added to, preferably compounded with or melt mixed with, the foamable polymer composition. The mineral nucleating agent (E) has preferably the form of a powder, i.e. the form of small particles. The average particle size is usually in the order of 0,1 $\mu$m to 50 $\mu$m.

Preferably, a blowing agent masterbatch (BAMB) comprises the blowing agent (C) and the mineral nucleating agent (E) as described in all embodiments above, more preferably the blowing agent masterbatch consists of the blowing agent (C) and the nucleating agent (E) as described in all embodiments above. The blowing agent masterbatch is added to, preferably compounded with or melt mixed with, the foamable polymer composition. The blowing agent masterbatch may further comprise a polymeric carrier, such as a polyethylene carrier.

The distribution of blowing agent (C) and the nucleating agent (E) in the polymer composition is improved by preferably melt mixing the blowing agent masterbatch into the foamable polymer composition by compounding prior to the extrusion of the foamable polymer composition in an extruder. This results in an improved cell structure as the gas released from decomposition of the blowing agent (C) and solid particles of the mineral nucleating agent (E) acting as bubble nucleation sites are better distributed in the polyolefin polymer melt. For communication cables it is critical to have a good cell structure within the foamed insulation in order to have isotropic electrical properties. It is desired to have a cell structure with many small cells evenly distributed within the insulation. The cell structure is also important for mechanical properties. Having many small cells that are well distributed will give better crush resistance compared to a structure with larger cells that are not homogeneously distributed as this will give weak parts in the insulation.

The foamable polymer composition according to the invention comprises a first polyolefin polymer (A) and a second polyolefin polymer (B). The first polyolefin polymer (A) has an MFR$_2$ (2,16 kg; 190 °C) of preferably 0,1 to 20 g/10min, more preferably of 1 to 17 g/10min, more preferably of 2 to 14 g/10min, more preferably of 4 to 14 g/10min, and most preferably of 6 to 10 g/10min, measured according to ISO 1133-1.

The second polyolefin polymer (B) has an MFR$_2$ (2,16 kg; 190 °C) of 2 to 15 g/10min measured according to ISO 1133-1. Preferably, the second polyolefin polymer (B) has an MFR$_2$ (2,16 kg; 190 °C) of 2,5 to 12 g/10min, more preferably of 3 to 10 g/10min, more preferably of 3,5 to 8 g/10min, and most preferably of 4 to 6 g/10min measured according to ISO 1133-1.

The first polyolefin polymer (A) is present preferably in amount of 20 to 95 wt.%, more preferably in an amount of 40 to 90 wt.%, more preferably in an amount of 50 to 85 wt.% and most preferably in an amount of 60 to 80 wt.%, based on the total foamable polymer composition and the second polyolefin polymer (B) is present preferably in an amount of 5 to 80 wt.%, more preferably in amount of 10 to 70 wt.%, more preferably in an amount of 15 to 60 wt.% and most preferably in an amount of 20 to 40 wt.%, based on the total foamable polymer composition.

The first polyolefin polymer (A) is preferably an ethylene homo- or copolymer or a propylene homo- or copolymer, more preferably an ethylene copolymer, and the second polyolefin polymer (B) is preferably an ethylene homo- or copolymer or a propylene homo- or copolymer, more preferably an ethylene homopolymer.

The first polyolefin polymer (A) is preferably a high density polyethylene homo- or copolymer having a density of 935 to 970 kg/m$^3$, measured according to ISO 1183-1 and the second polyolefin polymer (B) is preferably a low density polyethylene homo- or copolymer having a density of 880 kg/m$^3$ to 930 kg/m$^3$, measured according to ISO 1183-1.

More preferably, the high density polyethylene (HDPE) is a copolymer and the low density polyethylene (LDPE) is a homopolymer. Homopolymer means that the low density polyethylene (LDPE), respectively, comprise at least 90 wt.% ethylene monomer, preferably at least 95 wt.% ethylene monomer, and most preferably at least 99 wt.% ethylene monomer.

In case the high density polyethylene (HDPE)is a copolymer, the copolymer comprises ethylene monomer, preferably in an amount of at least 50 wt.% based on the total copolymer, and one or more comonomer(s). The comonomer can be alpha-olefins having 3 to 12 carbon atoms, e.g. propene, butene, hexene, octene, decene.

The low density polyethylene (LDPE) is preferably a homopolymer.

For foamed polyethylene used in communication cables, both electrical and mechanical properties are important. HDPE has a lower dielectric constant and lower loss factor than LDPE as well as higher strength and hardness.

The high density polyethylene (HDPE) polymer is polymerised in low pressure process, and is, for example, an optionally HDPE homopolymer or an optionally HDPE copolymer of ethylene with one or more comonomer(s) as described above. Further, the HDPE is polymerised in a low pressure polymerisation process in the presence of a catalyst. The catalyst can be for example a Phillips catalyst, a metallocene catalyst or a Ziegler-Natta catalyst. The polymerisation can be for example either gas phase polymerisation, slurry polymerisation or a combination of slurry polymerisation/gas-phase polymerisation or gas-phase polymerisation/gas-phase polymerisation. The polymerisation can also be solution polymerisation.

In order to foam a foamable polymer composition it is necessary that the foamable polymer composition has a good melt strength as too poor melt strength results in a collapsed cell structure which is not good for either mechanical or electrical properties of the cable layer, typically insulation layer. The melt strength can be improved by blending in a LDPE in the foamable polymer composition in order to improve the melt strength and to ensure a foamed layer with a closed cell structure and homogeneous cell distribution.

The low density polyethylene (LDPE) polymer is polymerised in a high pressure radical polymerisation process. Further, the LDPE is polymerised in a highpressure polymerisation process in the presence of an initiator(s) and chain transfer agents, such as propane, propione aldehyde and methyl ethyl ketone, to control the MFR.

The LDPE can be produced in, for example, a tubular polymerisation reactor, or in an autoclave polymerisation reactor.

The foamable polymer composition preferably comprises an antioxidant. The antioxidant is preferably a phenolic antioxidant, a phosphorous containing antioxidant or a blend thereof. The phenolic antioxidant is preferably a blend of pentaerythrityl-tetrakis(3-(3',5'-di-tert-butyl-4-hydroxyphenyl)-propionate (CAS-no. 6683-19-8; commercially available from BASF under trade name Irganox 1010) and tris-(2,4-di-tert-butylphenyl)phosphite (CAS-no.31570-04-4; commercially available from BASF under trade name Irgafos 168). This antioxidant blend is commercially available as Irganox B561 from BASF.

The antioxidant is present preferably in an amount of 0,01 wt.% to 2 wt.%, more preferably in an amount of 0,04 wt.% to 1 wt.%, and most preferably in an amount of 0,08 wt.% to 0,5 wt.%, based on the total foamable polymer composition.

The foamable polymer composition preferably comprises an acid scavenger. The acid scavenger is preferably a calcium stearate, a sodium stearate, a zinc stearate, or mixtures thereof, more preferably a zinc stearate.

The amount of acid scavenger is preferably 0,01 wt.% to 2 wt.%, more preferably 0,02 wt.% to 1 wt.%, and most preferably 0,04 wt.% to 0,08 wt.%, based on the total foamable polymer composition.

The dissipation factor, also known as tan $\delta$, is a measure of the degree of power dissipation in a dielectric material, i.e. a measure how much of the electrical energy that is transformed into heat in the dielectric material. The foamable polymer composition has a dissipation factor at 1,9 GHz of preferably $80 \cdot 10^{-6}$ to $160 \cdot 10^{-6}$, more preferably $110 \cdot 10^{-6}$ to $150 \cdot 10^{-6}$, more preferably $115 \cdot 10^{-6}$ to $140 \cdot 10^{-6}$, and most preferably $120 \cdot 10^{-6}$ to $135 \cdot 10^{-6}$.

The foamable polymer composition has a dissipation factor at 1 MHz of preferably $20 \cdot 10^{-6}$ to $140 \cdot 10^{-6}$, more preferably $22,5 \cdot 10^{-6}$ to $100 \cdot 10^{-6}$, more preferably $25 \cdot 10^{-6}$ to $50 \cdot 10^{-6}$, and most preferably $30 \cdot 10^{-6}$ to $45 \cdot 10^{-6}$.

A foamed polymer composition can be obtained by foaming the foamable polymer composition according to the invention.

Foaming is done by heating the foamable polymer composition to a temperature of preferably 130 °C to 240 °C, more preferably 130 °C to 230 °C, even more preferably to 130 °C to 220 °C. In this temperature range the blowing agent (C) present in the foamable polymer composition thermally decomposes into gaseous products as described above, thereby leading to a foamed polymer composition. Heating is preferably performed in an extruder. After exiting a die of the extruder, the gaseous products can expand, thereby forming a foamed polymer composition.

Preferably, a co-blowing agent (D) is added to the foamable polymer composition, preferably during extrusion of the foamable polymer composition in an extruder. During extrusion the co-blowing agent (D) is melt mixed with the molten polymer composition and the molten polymer composition is allowed to expand at the exit from the die of the extruder so as to obtain a foamed polymer composition.

Using the co-blowing agent (D) together with the blowing agent (C) is particularly advantageous so as to obtain foamed polymer compositions with a higher foaming degree than using the blowing agent (C) alone.

Extrusion is preferably performed in a gas injection foaming line.

The co-blowing agent (D) comprises preferably a gas, and the gas comprises $N_2$, CO, $CO_2$, Ar or mixtures thereof. More preferably, the co-blowing agent (D) comprises $N_2$ and/or $CO_2$, more preferably the co-blowing agent (D) consists of $N_2$ and/or $CO_2$.

The co-blowing agent (D) is used preferably in amount of 0,01 wt.% to 5 wt.%, more preferably 0,015 wt.% to 2,5 wt.%, more preferably in amount of 0,02 wt.% to 0,2 wt.%, more preferably in amount of 0,03 wt.% to 0,1 wt.%, based on the total foamable polymer composition.

The foamed polymer composition has a mean cell diameter preferably of 5 μm to 250 μm, more preferably of 50 μm to 100 μm, more preferably of 60 μm to 95 μm, and most preferably of 65 μm to 90 μm.

The foamed polymer composition has a density preferably of 95 kg/m³ to 860 kg/m³, more preferably 150 kg/m³ to 800 kg/m³, more preferably 400 kg/m³ to 750 kg/m³, more preferably 420 kg/m³ to 730 kg/m³, more preferably 440

kg/m$^3$ to 710 kg/m$^3$, and most preferably 460 kg/m$^3$ to 690 kg/m$^3$.

The invention also provides a cable comprising at least one layer which comprises the foamable polymer composition according to the invention or which comprises the foamed polymer composition according to the invention. Thus, the cable comprises at least one layer which comprises the foamable polymer composition according to any of the embodiments described above, or the cable comprises at least one layer which comprises the foamed polymer composition according to any of the embodiments described above.

Preferably, the cable is a communication cable, preferably a coaxial cable or a twisted pair cable.

The at least one layer is preferably an insulation layer of the cable. The insulation layer is the layer which is surrounding the innermost conducting wire, the conducting wire usually made of copper. In preferred embodiments, the insulation layer comprising the foamable polymer composition of the invention or the foamed polymer composition of the invention is in direct contact with the conducting wire. The typical thickness of an insulation layer is from 0,01 mm to 80 mm for coaxial cables, and 0,1 mm to 2 mm for data cables.

The foamed polymer composition according to the invention can be preferably produced by a process for producing a foamed polymer composition, the method comprising the steps of

a) providing a foamable polymer composition according to the invention,

b) heating the foamable polymer to a temperature of 150 °C to 240 °C to obtain a molten polymer composition, and

c) foaming the molten polymer composition.

Preferably, the heating of step b) takes place in an extruder and the foaming of the obtained molten polymer composition in step c) takes place after the molten polymer composition exits a die of the extruder.

Preferably, a co-blowing agent (D) is added to the foamable polymer composition in step b). Adding is preferably done by injecting the co-blowing agent (D) into the foamable polymer composition or by melt-mixing the co-blowing agent (D) with the foamable polymer composition. Melt-mixing is preferably done in an extruder.

Preferably, the extruder can be any extruder known in the art suitable for melt mixing a polymer melt with a blowing agent.

All the above described embodiments of the foamable polymer composition according to the invention are also preferred embodiments of the foamable polymer composition used in the process for producing a foamed polymer composition.

All preferred embodiments of the blowing agent (C) as described above are preferred embodiments of the blowing agent (C) used in the process for producing a foamed polymer composition.

All preferred embodiments of the co-blowing agent (D) as described above are preferred embodiments of the co-blowing agent (D) used in the process for producing a foamed polymer composition.

**EXAMPLES**

**1. Measurement Methods**

a) Melt Flow Rate

The melt flow rate (MFR) is determined according to ISO 1133-1 and is indicated in g/10 min. The MFR is an indication of the flowability, and hence the processability, of the polymer. The higher the melt flow rate, the lower the viscosity of the polymer.

The $MFR_2$ of polyethylene (co-)polymers is measured at a temperature 190 °C and at a load of 2.16 kg. The $MFR_2$ of polypropylene (co-)polymers is measured at a temperature 230 °C and at a load of 2.16 kg.

b) Density of the solid material

The method for determining the density of the foamable polymer compositions is following ISO 17855-2 for sample preparation and ISO 1183-1 / method A for the density measurement.

Compression moulding is done in a controlled cooling press, with a moulding temperature of 180 °C for polyethylene, and a cooling rate of 15 °C/min. The specimens are conditioned at 23 $\pm$ 2 °C for minimum of 16 hours. Density is determined at 23 $\pm$ 0,1 °C using isododecane as the immersion-liquid, and with no buoyancy correction.

c) Density of the foamed material

To determinate the density of the foamed samples the weight of each specimen was measured in air atmosphere ($w_L$ in g) as well as in a medium with known temperature ($w_W$ in g). All the measurements were performed at 22 °C in distilled water with 3 drops of a wetting agent added. For the calculation of the density, the following equation was used:

$$\rho = \frac{w_L}{w_L - w_W}(\rho_W - \rho_L) + \rho_L$$

where

$\rho$ = density in g/cm$^3$

$\rho_W$ = density of water in g/cm$^3$ at the measuring temperature

$\rho_L$ = density of air (0.0012 g/cm$^3$)

d) Calculated cell density

The cell density ($N_b$/cm$^3$) of foamed polymer compositions has been calculated as follows:

$$N_b = \frac{1 - \dfrac{\rho_F}{\rho_m}}{\dfrac{\pi}{6}D^3}$$

where

$\rho_F$ = density of the foamed specimen in g/cm$^3$
$\rho_m$ = density of the polymer matrix in g/cm$^3$
D = mean cell diameter in cm

e) Calculation of density reduction

Density reduction (X) in percentage is calculated with the following formula:

$$X = \left(1 - \frac{D_F}{D_S}\right) * 100$$

where

$D_S$ = density of the solid material in kg/m$^3$
$D_F$ = density of the foamed material in kg/m$^3$

f) Determination of mean cell diameter

For the determination of the mean cell diameter, the cross-sectional area of about 60 cells (if available) was measured. Therefore the cells were marked manually in the picture analysing software of the Alicona system. The mean diameters of the cells were calculated under the assumption that the bubbles have a circular cross section. This method helps to compare the foam morphologies of the different samples, because the geometry of most of the cells differs from the ideal round shape and so a reasonable comparison of direct measured diameters is not possible.

By using the following equation and subsequently averaging the calculated values of each bubble diameter the mean diameter was determined.

$$D_Z = \sqrt{\frac{4A_Z}{\pi}}$$

where

    $D_Z$ = diameter of one foam cell under the assumption of a circular cross section in $\mu$m

    $A_Z$ = cross section of one foam bubble in $\mu$m$^2$

g) Microscopy analysis of foamed polymer compositions

All samples were examined with respect to their density and foam morphology. For this reason the cell size was measured using the light microscope Alicona InfiniteFocus (Alicona Imaging GmbH, Austria). The density was determined using a high precision balance (Excellence XS Analyse Waage, Mettler Toledo AG, Switzerland) equipped with a density measurement kit (Density Kit, Mettler Toledo AG, Switzerland).

**2. Dielectric Properties (Dielectric loss tangent value (tan $\delta$) - dissipation factor at 1.9 GHz)**

a) Preparation of the plaques:

Polymer compounds have been compression moulded at 140°C in a frame to yield plates of 4 mm thickness, 80 mm width and 130 mm length. The pressure has been adjusted high enough to obtain a smooth surface of the plates. A visual inspection of the plates showed no inclusions such as trapped air or any other visible contamination.

b) Characterization of the plaques for dielectric properties:

For the measurement of the dielectric constant and the tangent delta (tan $\delta$) of the materials, a split-post dielectric resonator has been used together with a network analyser (Rodhe & Schwarz ZVL6). The technique measures the complex permittivity of dielectric laminar specimen (plaques) in the frequency range from 1 - 10 GHz. The test is conducted at 23 °C.

The split-post dielectric resonator (SPDR) was developed by Krupka and his collaborators [see: J. Krupka, R. G. Geyer, J. Baker-Jarvis and J. Ceremuga, 'Measurements of the complex permittivity of microwave circuit board substrates using a split dielectric resonator and re-entrant cavity techniques', Proceedings of the Conference on Dielectric Materials, Measurements and Applications - DMMA '96, Bath, UK, published by the IEE, London, 1996.] and is one of the easiest and most convenient techniques to use for measuring microwave dielectric properties. Two identical dielectric resonators are placed coaxially along the z-axis so that there is a small laminar gap between them into which the specimen can be placed to be measured. By choosing suitable dielectric materials the resonant frequency and Q-factor of the SPDR can be made to be temperature stable. Once a resonator is fully characterized, only three parameters need to be measured to determine the complex permittivity of the specimen: its thickness and the changes in resonant frequency, Af, and in the Q-factor, AQ, obtained when it is placed in the resonator.

Specimens of 4 mm thickness have been prepared by compression moulding as described above and measured at a high frequency of 1.9 GHz.

A comprehensive review of the method is found in J. Krupka, R.N. Clarke, O.C. Rochard and A.P. Gregory, "Split-Post Dielectric Resonator technique for precise measurements of laminar dielectric specimens - measurement uncertainties" in Proceedings of the XIII Int. Conference MIKON'2000, Wroclaw, Poland, pp 305 - 308, 2000.

**3. Dielectric Properties (Dielectric loss tangent value (tan $\delta$) - dissipation factor at 1 MHz)**

a) Preparation of the plaques

Polymer compounds have been compression moulded in a punch press at 140°C in a frame to yield plates of 1,12 mm thickness, 210 mm width and 210 mm length. The pressure applied using an aluminium plate was 25 bar for 2,5 min and 190 bar for 4 min. Cooling is performed at 15°C /min.

b) Characterization of the plaques for dielectric properties

The method used herein is a modification of ASTM D150 (2018) (AC loss characteristics and permittivity (dielectric constant) of solid electrical insulation).

The method herein determines the electrical properties of polymer compositions or polymer compounds in terms of dissipation factor at a frequency of 1 MHz. This electrical property is determined using a Q-meter by comparison with a stable reference fluid (silicone oil). The silicone oil used in the examples was Dow Corning 200.

The plaques obtained as described above were cut so as to obtain two specimen plaques, each with dimensions of 1,12 mm thickness, 66,5 mm width and 101 mm length, and a specimen was put into a two terminal liquid displacement cell which is connected to a resonance circuit. This specimen is analysed in a Q-meter in a stable reference liquid (silicone oil) at a frequency of 1 MHz. Dissipation factor is measured with and without a specimen plaque in the reference liquid, where the difference with and without the specimen plaque represents the reported result. The test is conducted at 23 °C.

The dissipation factor (DF) of a specimen can be measured in a resonant circuit as follows:

$$DF = \Delta(1/Q) \times CT/CS \times (M_{out}/T_s + M_{out} - M_{in})$$

where

Q = Maximum voltage at resonance from the Q-Meter

$\Delta$ Q = difference in voltage between the specimen in the cell and without specimen in the cell

CT = Total capacitance of measuring circuit

CS = Capacitance of a specimen

$M_{out}$ = Micrometer setting at resonance without specimen

$M_{in}$ = micrometer setting at resonance with specimen

$T_s$ = Thickness of the specimen

**4. Materials**

As the HDPE component a unimodal Ziegler-Natta catalysed HDPE copolymer with butene as comonomer was used with $MFR_2$ of 8 g/10 min and a density 963 kg/m$^3$.

LDPE is an autoclave LDPE having an $MFR_2$ of 4,5 g/10 min and a density of 923 kg/m$^3$. CA7230 is commercially available from Borealis AG.

nCore 7155-M1-300 is a commercially available azodicarbonamide (ADCA) based blowing agent master batch from Americhem. It contains 15% of active blowing agent.

Irganox B561 is an antioxidant blend commercially available from BASF.

Zincum TX is a zinc stearate acid scavenger, commercially available from Baerlocher.

Tracel® PO 2217: An endothermic blowing agent masterbatch commercially available from Tramaco GmbH containing a derivate of citric acid and in which the amount of the derivate of citric acid is 100 wt % of the added blowing agents. The masterbatch further comprise a mineral nucleating agent.

**5. Preparation of examples**

5.1 Mixing of materials

The examples in Table 1 and 3 were compounded on BUSS MDK46 continuous extruder (construction year 1985). The line is a single-screw kneader with screw diameter of 46 mm and 11 L/D.

Table 1: Composition of comparative (CE) and inventive (IE) examples for foaming, amounts are given in wt.%

| Material | CE1 | IE1 | IE2 |
|---|---|---|---|
| HDPE / wt.% | 69,6 | 69,6 | 69,6 |
| LDPE / wt.% | 29,8 | 29,9125 | 29,575 |
| Irganox B561 /wt.% | 0,1 | 0,1 | 0,1 |
| Zincum TX / wt.% | 0,05 | 0,05 | 0,05 |
| nCore 7155-M1-300 / wt.% | 0,45 | | |
| Tracel PO 2217 / wt.% | | 0,3375 | 0,675 |

5.2 Extrusion and Foaming

Polymer pellets of the compositions of Table 1 have been extruded on a Rosendahl RE45 extrusion line with 45 mm diameter screw. The extruder has a total length of 32 D, including an 8 D long, oil tempered cylinder elongation used for a better control of the polymer melt temperature. To realize a higher dwell time and a better homogenization a static mixer (type SMB-R from Sulzer, Switzerland) with a length of 4 D is mounted between the cylinder elongation and the extrusion die. A round die of 4.0 mm was used. The extruder had 10 temperature zones and the gas ($N_2$) as co-blowing agent (D) was injected between zone 7 and 8.

The temperature settings (°C) were as follows (slash denotes different temperature zones):

$T_1$: 40/150/160/160/165/170/190/190/170/170/170/170/170 °C

Results are shown in Table 2 below. Foam density was measured at 22 °C.

Table 2: Properties of the obtained foamed compositions

| Ex. | Nitrogen Amount wt.% | Temperature setting / melt temp (°C) | Mean cell diameter μm | Density kg/m$^3$ | Density reduction % | Calculated cell density Nb/cm$^3$ |
|---|---|---|---|---|---|---|
| CE1 | 0,04 | $T_1$ / 186 | 82 | 488 | 48,5 | $1,70 \cdot 10^6$ |
| CE1 | 0,05 | $T_1$ / 186 | 85 | 480 | 49,2 | $1,52 \cdot 10^6$ |
| IE1-1 | 0,04 | $T_1$ / 186 | 86 | 530 | 44 | $1,31 \cdot 10^6$ |
| IE1-1 | 0,05 | $T_1$ / 186 | 74 | 564 | 40,4 | $1,94 \cdot 10^6$ |
| IE1-2 | 0,04 | $T_1$ / 187 | 71 | 685 | 27,6 | $1,46 \cdot 10^6$ |
| IE1-2 | 0,05 | $T_1$ / 187 | 86 | 570 | 49,6 | $1,18 \cdot 10^6$ |

Two amounts of the blowing agent master batch were tested. The amount of blowing agent master batch in IE2-1 was just below the ADCA amount and in IE2-2 almost double the ADCA amount. It is known in literature that ADCA (an exothermic blowing agent) has a gas yield of 220 cm$^3$/g, whereas, for example blend of citric acid and sodium bicarbonate (an endothermic blowing agent) generates only 120 cm$^3$/g of gas. Thus the amount of an endothermic blowing agent often needs to be increased compared to exothermic blowing agents.

The electrical loss factor (dissipation factor) has been measured on Comparative Example 2 and Inventive examples IE2-1 to IE2-3. The composition of all examples is given in Table 3 below. After compounding as described above, all materials were compression moulded under foaming temperature (140°C) as described above. Those plaques were submitted to loss factor measurement (tan δ) at 1,9 GHz and 1 MHz, respectively, as described above.

Table 3: Composition of comparative (CE) and inventive (IE) examples with amounts given in wt.%, and results of measurement of dissipation factor before foaming.

| Material | CE2 | IE2-1 | IE2-2 |
|---|---|---|---|
| HDPE / wt.% | 69,60 | 69,60 | 69,60 |
| LDPE/ wt.% | 29,95 | 30,20 | 29,90 |
| nCore 7155-M1-300 / wt.% | 0,45 | | |

(continued)

| Material | CE2 | IE2-1 | IE2-2 |
|---|---|---|---|
| Tracel PO 2217 / wt.% | | 0,2 | 0,5 |
| Dissipation factor at 1,9 GHz ($\cdot 10^{-6}$) | 140 | 128 | 128 |
| Dissipation factor at 1 MHz ($\cdot 10^{-6}$) | 31 | 36 | 39 |

Surprisingly, the inventive examples IE2-1 and IE2-2 in Table 3 show that with an endothermic blowing agent a similar low dissipation factor at 1,9 GHz compared to an insulation formulation containing ADCA (CE2) is possible to achieve. The same pertains to the dissipation factor at 1 MHz.

**Claims**

1.   Foamable polymer composition comprising

(A) a first polyolefin polymer,
(B) a second polyolefin polymer having an $MFR_2$ (2,16 kg; 190 °C) of 2 to 15 g/10min measured according to ISO 1133, and
(C) a blowing agent in an amount of 0,01 wt.% to 2 wt.% based on the total foamable polymer composition,

wherein the blowing agent (C) comprises citric acid and/or derivative of citric acid in an amount of more than 90 wt.% based on the total blowing agent (C), and
wherein the first polyolefin polymer (A) has a higher density than the second polyolefin polymer (B).

2.   The foamable polymer composition according to claim, wherein the derivative of citric acid comprises alkali metal salts of citric acid, esters of citric acid or mixtures thereof.

3.   The foamable polymer composition according to any one of the preceding claims, wherein the foamable polymer composition further comprises a mineral nucleating agent (E).

4.   The foamable polymer composition according to any one of the preceding claims, wherein the first polyolefin polymer (A) has an $MFR_2$ (2,16 kg; 190 °C) of 0,1 to 20 g/10min measured according to ISO 1133.

5.   The foamable polymer composition according to any one of the preceding claims, wherein the first polyolefin polymer (A) is present in amount of 20 to 95 wt.% based on the total foamable polymer composition and wherein the second polyolefin polymer (B) is present in an amount of 5 to 80 wt.% based on the total foamable polymer composition.

6.   The foamable polymer composition according to any one of the preceding claims, wherein the first polyolefin polymer (A) is a high density polyethylene homo- or copolymer having a density of 935 kg/m$^3$ to 970 kg/m$^3$ measured according to ISO 1183-1 and the second polyolefin polymer (B) is a low density polyethylene homopolymer having a density of 880 kg/m$^3$ to 930 kg/m$^3$ measured according to ISO 1183-1.

7.   The foamable polymer composition according to any one the preceding claims, wherein the foamable polymer composition has a dissipation factor at 1,9 GHz of $80 \cdot 10^{-6}$ to $160 \cdot 10^{-6}$ and/or a dissipation factor at 1 MHz of $20 \cdot 10^{-6}$ to $140 \cdot 10^{-6}$.

8.   Foamed polymer composition obtained by foaming the foamable polymer composition according to any one of claims 1 to 7.

9.   Foamed polymer composition according to claim 8, wherein foaming is done by heating the foamable polymer composition to a temperature of 150°C to 240 °C.

10.   Foamed polymer composition according to claims 8 or 9, wherein a co-blowing agent (D) is added to the foamable polymer composition.

**11.** Foamed polymer composition according to claim 10, wherein the co-blowing agent (D) comprises $N_2$, CO, $CO_2$, Ar or mixtures thereof.

**12.** Foamed polymer composition according to any one of claims 10 or 11, wherein the co-blowing agent (D) is used in amount of 0,01 wt.% to 0,5 wt.% based on the total foamable polymer composition.

**13.** Foamed polymer composition according to any one of claims 8 to 12, wherein the foamed polyolefin composition has a mean cell diameter of 5 $\mu$m to 250 $\mu$m.

**14.** The foamed polymer composition according to any one of claims 8 to 13, wherein the foamed polymer composition has a density of 95 kg/m$^3$ to 860 kg/m$^3$.

**15.** Cable comprising at least one layer which comprises the foamable polymer composition according to claims 1 to 7, or which comprises the foamed polymer composition according to claims 8 to 14.

Europäisches
Patentamt

European
Patent Office

Office européen
des brevets

# EUROPEAN SEARCH REPORT

Application Number

EP 18 21 5241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/082212 A1 (DOW GLOBAL TECHNOLOGIES LLC [US]; SUN GANGWEI [CN]; ESSEGHIR MOHAMED []) 2 June 2016 (2016-06-02) * examples IE-6 * ----- | 1-15 | INV. C08L23/00 |

TECHNICAL FIELDS
SEARCHED      (IPC)

C08L

The present search report has been drawn up for all claims

| Place of search | Date of completion of the search | Examiner |
|---|---|---|
| Munich | 11 February 2019 | Rouault, Yannick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 21 5241

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2019

| Patent document cited in search report | Publication date | Patent family member(s) | Publication date |
|---|---|---|---|
| WO 2016082212 A1 | 02-06-2016 | BR 112017010189 A2 | 06-02-2018 |
| | | CA 2969005 A1 | 02-06-2016 |
| | | CN 107148654 A | 08-09-2017 |
| | | EP 3224836 A1 | 04-10-2017 |
| | | JP 2017535656 A | 30-11-2017 |
| | | KR 20170095213 A | 22-08-2017 |
| | | US 2017267828 A1 | 21-09-2017 |
| | | WO 2016082212 A1 | 02-06-2016 |

EPO FORM P0459

For more details about this annex : see Official Journal of the European Patent Office, No. 12/82

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014018768 A

**Non-patent literature cited in the description**

- **HARTMAN et al.** *Ind. Eng. Chem. Res.,* 2013, vol. 52, 10619-10626
- *CHEMICAL ABSTRACTS,* 6683-19-8
- *CHEMICAL ABSTRACTS,* 31570-04-4
- Measurements of the complex permittivity of microwave circuit board substrates using a split dielectric resonator and re-entrant cavity techniques. **J. KRUPKA ; R. G. GEYER ; J. BAKER-JARVIS ; J. CEREMUGA.** Proceedings of the Conference on Dielectric Materials, Measurements and Applications - DMMA '96. IEE, 1996
- **J. KRUPKA ; R.N. CLARKE ; O.C. ROCHARD ; A.P. GREGORY.** Split-Post Dielectric Resonator technique for precise measurements of laminar dielectric specimens - measurement uncertainties. *Proceedings of the XIII Int. Conference MIKON'2000,* 2000, 305-308